# EUROPÄISCHE PATENTSCHRIFT

(11) **EP 0 382 116 B1**
(45) Veröffentlichungstag und Bekanntmachung des Hinweises auf die Patenterteilung: **15.09.1993**
(21) Anmeldenummer: 90102088.3
(22) Anmeldetag: 02.02.1990
(51) Int. Cl.: A62D 3/00, A23L 1/015

(54) **Verfahren zur Entfernung von Pestiziden aus Ginsengwurzel**
Process for removing pesticides from ginseng root
Procédé d'élimination des pesticides de la racine de ginseng

(30) Priorität: 04.02.1989 DE 3903374
(43) Veröffentlichungstag der Anmeldung: 16.08.1990
(73) Patentinhaber: SKW Trostberg Aktiengesellschaft, 83308 Trostberg (DE); PHARMA-ZENTRALE GMBH, 58313 Herdecke (DE)
(72) Erfinder: Schütz, Erwin, Dr., D-8223 Trostberg (DE); Vollbrecht, Heinz-Rüdiger, Dr., D-8226 Altenmarkt (DE)
(74) Vertreter: Huber, Bernhard, Dipl.-Chem.

(56) Entgegenhaltungen:
- DE-A- 2 909 872
- US-A- 4 842 878
- PLANTA MEDICA, Band 50, Nr. 2, April 1984, Seiten 117-204, George Thieme Verlag, Stuttgart, DE; E. STAHL et al.: "Entfernung von Pestizidrückständen aus Drogen mit überkritischem Kohlendioxid"
- TALANTA, Band 35, Nr. 4, April 1988, Seiten 314-316, Pergamon Press plc, GB; J.R. KIM et al.: "Extraktion von Ginsenosiden mit Ammoniak und Kohlensäure unter erhöhtem Druck"
- CHEMISTRY AND INDUSTRY, Nr. 10, 16. Mai 1981, Seiten 359-362, Londen, GB; C. GRIMMETT: "The use of liquid carbon dioxide for extracting natural products"

## Beschreibung

Gegenstand der Erfindung ist ein Verfahren zur Entfernung von Pestiziden aus Ginsengwurzel durch Extraktion mit verdichtetem Kohlendioxid.

Der Gehalt an Pestiziden in solchen Pflanzen, die für die Gewinnung von Arzneimitteln bestimmt sind, ist in vielen Ländern durch Höchstmengenverordnungen begrenzt und eines der wichtigsten Kriterien für die Verkehrsfähigkeit von Drogen. Die Entfernung von Pestiziden aus diesen Drogen bei gleichzeitiger Erhaltung des vollen Wirkungsspektrums besitzt deshalb ein hohes Interesse, insbesondere dann, wenn es sich um sehr wertvolle Stoffe handelt.

Eine Entfernung dieser unerwünschten Pestizide durch Extraktion mit einem Lösemittel setzt voraus, daß die Extraktion ausreichend selektiv ist, d.h. ausschließlich unerwünschte Substanzen extrahiert werden und andererseits auch nach der Extraktion die Droge in einem verwendbaren Zustand vorliegt, d.h. frei von unerwünschten Rückständen an Lösemitteln ist. Es ist bekannt, daß die Hochdruckextraktion mit überkritischem Kohlendioxid diese letztere Voraussetzung erfüllt.

So wird beispielsweise in der DE-A- 36 32 401 die Herstellung pestizidarmer Hopfenextrakte aus mit Pestiziden belastetem Hopfen beschrieben. Dabei werden in einem ersten Schritt die Pestizide und die Hopfeninhaltsstoffe mit verdichteten Gasen extrahiert und in einer nachfolgenden Stufe wird die Trennung von Extrakt und Pestiziden mit Hilfe eines festen Adsorptionsmittels vorgenommen. Bei diesem Verfahren ist jedoch eine vollständige Extraktion der Pestizide aus dem Hopfen gar nicht erwünscht, da ja der Extrakt weiterverwendet wird. Ein weiterer Nachteil ist die unzureichende Selektivität der Adsorptionsmittel, die neben den Pestiziden auch erwünschte Hopfeninhaltsstoffe binden und so die Ausbeute reduzieren.

Weiter ist es aus "Verdichtete Gase zur Extraktion und Raffination" Springer Verlag (1987), S. 231-233 bekannt, Pestizide aus Sennesblättern mit trockenem, überkritischem Kohlendioxid zu entfernen, wobei der Gehalt an chlorierten Pestiziden um bis zu 98 % reduziert wird, ohne daß die polaren Wirkstoffe, die Sennoside, mitextrahiert werden.

Eine Übertragung des bei Sennesblättern erfolgreichen Verfahrens auf die Entfernung von Pestiziden aus Ginsengwurzel erwies sich jedoch als nicht möglich. Die als Wirkstoffe anzusehenden Ginsenoside werden zwar mit überkritischem Kohlendioxid nicht extrahiert, jedoch werden auch die chlorierten Pestizide nicht in befriedigender Weise entfernt. So wird beispielsweise Quintocen (Pentachlor-Nitrobenzol), welches als Hauptverunreinigung der Ginsengwurzel und somit als Leitsubstanz für unerwünschte lipophile, chlorierte Pestizide anzusehen ist, lediglich um etwa 30 % reduziert, so daß die extrahierten Ginsengwurzeln nicht einmal annähernd in den Bereich der Verkehrsfähigkeit gelangen, wenn ihre Pestizidgehalte die erlaubten Werte um den Faktor 100 überschreiten, was durchaus vorkommt.

Der Erfindung liegt daher die Aufgabe zugrunde, ein Verfahren zur Entfernung von Pestiziden aus Ginsengwurzei durch Extraktion mit verdichtetem Kohlendioxid zu schaffen, welches die genannten Nachteile des Standes der Technik nicht aufweist, und es mit technisch einfachen Mitteln ermöglicht, eine weitgehende Entfernung der Pestizide zu erreichen, ohne dabei nennenswerte Verluste an Wirkstoffen hinnehmen zu müssen.

Diese Aufgabe wurde erfindungsgemäß dadurch gelöst, daß die Ginsengwurzel vor der Extraktion einen Feuchtigkeitsgehalt von 14 bis 65 Gew.-% aufweist.

Es hat sich nämlich überraschenderweise gezeigt, daß man mit dem Verfahren der Erfindung die unerwünschten Pestizide praktisch vollständig entfernen kann, während die wichtigen Wirkstoffe in der Wurzel verbleiben.

Dies ist insbesondere deshalb überraschend, weil die chlorierten Pestizide wie z.B. das Quintocen praktisch wasserunlöslich sind. Außerdem sind die Extraktionsausbeuten beim erfindungsgemäßen Verfahren wesentlich höher als bei Zusatz von organischen Lösemitteln wie z.B. Ethanol, Aceton oder Ethylacetat, obgleich die betreffenden Pestizide in diesen organischen Schleppmitteln wesentlich besser löslich sind.

Beim Verfahren der Erfindung kann die Ginsengwurzel, die nach der Trocknung in der Regel einen natürlichen Wassergehalt von etwa 8 bis 10 Gew.-% aufweist, zweckmäßig vor der Extraktion vermahlen und anschließend vorzugsweise durch Zugabe von Wasser auf einen Feuchtigkeitsgehalt von 14 bis 25 Gew.-% gebracht werden. Dies läßt sich z.B. erreichen, indem man etwa 4 bis 20 Gew.-% Wasser, bezogen auf das Ausgangsgewicht der Wurzel zugibt. Die verwendete CO₂-Menge bei vermahlener Ginsengwurzel sollte vorzugsweise 10 bis 100 kg CO₂ pro kg Wurzel betragen. Die Befeuchtung der Ginsengwurzel kann in üblichen Mischapparaturen und nach bekannten technischen Verfahren erfolgen. Es sollte dabei darauf geachtet werden, daß beim Befeuchten kein Verklumpen der vermahlenen Wurzel auftritt. In einer bevorzugten Ausführungsform wird die Wurzel durch langsames Aufsprühen von Wasser in einer Mischapparatur befeuchtet.

Anstatt in gemahlenem Zustand kann man die Ginsengwurzel auch in ganzer oder grob zerkleinerter Form einsetzen. Bei ganzen oder grob zerkleinerten Wurzeln sind jedoch längere Extraktionszeiten und größere CO₂-Mengen erforderlich. Für eine 90%ige Dekontaminierung benötigt man beispielsweise 5 bis 10 Stunden und 100 bis 1500 kg CO₂/kg Wurzel. Auch der Feuchtigkeitsgehalt kann bei ganzen Wurzeln bis zu 60 Gew.-% betragen, während bei gemahlenen Wurzeln nur eine Feuchte von etwa 25 Gew.-% möglich ist (oberhalb 25 Gew.-% findet ein Zusammenklumpen statt, wodurch eine Verarbeitbarkeit nicht mehr gegeben ist). Somit ist bei Verwendung von ganzen Wurzeln eine Wasserzugabe von 4 bis 125 Gew.-%, bezogen auf das Ausgangsgewicht der Wurzel möglich.

Schließlich kann man auch die Ginsengwurzel in geernteter und nicht getrockneter Form für die Extraktion einsetzen, wobei eine Wasserzugabe im allgemeinen nicht notwendig ist. Gegebenenfalls nach diesem Befeuchtungsschritt wird die Ginsengwurzel der Extraktion mit verdichtetem Kohlendioxid unterworfen, wobei das Kohlendioxid in flüssigem oder überkritischem Zustand vorliegen kann. Die Extraktionsbedingungen können in weiten Grenzen variiert werden, doch sollte zur Erzielung einer günstigen Extraktionszeit vorzugsweise bei einem Druck von über 100 bar und bei einer Temperatur von über 40°C gearbeitet werden. Besonders bevorzugt wird die Extraktion bei einem Druck von 200 bis 350 bar und bei einer Temperatur von 60 bis 90°C durchgeführt. Die Kohlendioxidmenge sollte zweckmäßig so gewählt werden, daß der Gesamtdurchsatz 10 bis 1500 kg CO₂ pro kg Ginsengwurzel beträgt.

Im Rahmen der Erfindung kann sowohl mit befeuchtetem als auch mit trockenem Kohlendioxid extrahiert werden. In einer bevorzugten Ausführungsform des erfindungsgemäßen Verfahrens wird die Feuchte der Droge zuerst durch Extraktion mit feuchtem CO₂ konstant gehalten und danach mit trockenem CO₂ weiterextrahiert, wobei der Wassergehalt abnimmt.

Durch diese Verfahrensvariante kann man, wenn man zusätzlich die Extraktionstemperatur nicht zu niedrig wählt, eine gegebenenfalls nachfolgende Trocknungsperiode abkürzen bzw. einen Trocknungsschritt vollständig einsparen. Falls erwünscht, kann sich an die Extraktion eine Trocknung der extrahierten Ginsengwurzel anschließen, wobei mit üblichen Vorrichtungen der jeweils gewünschte Feuchtigkeitsgehalt eingestellt werden kann.

Mit Hilfe des erfindungsgemäßen Verfahrens ist es möglich, den Pestizidgehalt in der Ginsengwurzel um über 99,7 % zu senken. Damit gelingt es ohne weiteres, die höchstens zulässigen Mengen, die beispielsweise gemäß der deutschen Pflanzenschutzhöchstmengenverordnung bei 20 ppb für Quintocen liegen, zu unterschreiten. Außerdem werden bei diesem Verfahren die Wirkstoffe (Ginsenoside) in ihrem Gehalt nicht verändert. Mitextrahiert werden in nennenswertem Umfang nur Bestandteile des etherischen Öls und lipophile Stoffe wie z.B. Wachse.

Die Abscheidung der Pestizide aus dem CO₂ kann durch Dichteerniedrigung oder durch Adsorption an ein geeignetes Adsorptionsmittel, wie z.B. Aktivkohle, vorgenommen werden, wobei das Adsorbens in einem separaten oder auch dem gleichen Druckbehälter, getrennt oder auch in Mischung mit dem Extraktionsgut, vorgelegt werden kann.

Die nachfolgenden Beispiele erläutern die Erfindung.

### Beispiel 1 (Vergleich)

1,5 kg gemahlene Ginsengwurzel mit einem Feuchtigkeitsgehalt von 9,3 Gew.-% wurden 72 Minuten mit trockenem CO₂ bei 250 bar und 80°C extrahiert. Der Restgehalt an Quintocen betrug 70 % des Ausgangswertes.

### Beispiel 2

1,5 kg gemahlene Ginsengwurzel wurden durch langsames Besprühen mit 150 g Wasser in einer Mischapparatur auf einen Feuchtigkeitsgehalt von 17,5 Gew.-% gebracht und 72 Minuten lang mit trockenem CO₂ bei 250 bar und 80°C extrahiert. Der Gehalt an Quintocen wurde durch die Extraktion auf 6 % des Ausgangswertes reduziert. Eine Trocknung des extrahierten Gutes (Feuchtigkeitsgehalt 9,8 Gew.-%) war nicht erforderlich.

### Beispiel 3

1,5 kg gemahlene Ginsengwurzel wurden durch langsames Besprühen mit 150 g Wasser in einer Mischapparatur auf einen Feuchtigkeitsgehalt von 18,3 Gew.-% gebracht und 30 Minuten mit feuchtem, danach 60 Minuten mit trockenem CO₂ extrahiert (gleiche Parameter wie Beispiel 1). Der Gehalt an Quintocen wurde durch die Extraktion auf 0,3 % des Ausgangswertes reduziert. Eine Trocknung des extrahierten Gutes (Feuchtigkeitsgehalt 9,9 Gew.-%) war nicht erforderlich.

### Beispiel 4

0,6 kg ganze Ginsengwurzeln wurden durch langsames Besprühen mit 220 g Wasser in einer Mischapparatur auf einen Feuchtigkeitsgehalt von 35 Gew.-% gebracht und 8 Stunden mit feuchtem CO₂ bei 250 bar und 80°C extrahiert. Der Gehalt an Quintocen wurde durch die Extraktion auf 10 % des Ausgangswertes reduziert. Die extrahierten Wurzeln wurden nach der Extraktion bei 50°C im Luftstrom getrocknet.

## Patentansprüche

1. Verfahren zur Entfernung von Pestiziden aus Ginsengwurzel durch Extraktion mit verdichtetem Kohlendioxid, **dadurch gekennzeichnet,** daß die Ginsengwurzel vor der Extraktion einen Feuchtigkeitsgehalt von 14 bis 65 Gew.-% aufweist.

2. Verfahren nach Anspruch 1, **dadurch gekennzeichnet,** daß man die Ginsengwurzel vor der Extraktion mit 4 bis 125 Gew.-% Wasser, bezogen auf das Ausgangsgewicht der Wurzel, befeuchtet.

3. Verfahren nach Anspruch 1, **dadurch gekennzeichnet,** daß man die Ginsengwurzel in frisch geernteter und nicht getrockneter Form für die Extraktion einsetzt.

4. Verfahren nach einem der Ansprüche 1 bis 3, **dadurch gekennzeichnet,** daß man gemahlene Ginsengwurzel für die Extraktion einsetzt.

5. Verfahren nach einem der Ansprüche 1 bis 3, **dadurch gekennzeichnet,** daß man Ginsengwurzeln in ganzer oder grob zerkleinerter Form für die Extraktion einsetzt.

6. Verfahren nach einem der Ansprüche 1 bis 5, **dadurch gekennzeichnet,** daß man die Ginsengwurzel durch langsames Aufsprühen von Wasser in einer Mischapparatur befeuchtet.

7. Verfahren nach einem der Ansprüche 1 bis 6, **dadurch gekennzeichnet,** daß man die Extraktion bei einem Druck > 100 bar und bei einer Temperatur > 40°C durchführt.

8. Verfahren nach einem der Ansprüche 1 bis 7, **dadurch gekennzeichnet,** daß die Extraktion bei einem Druck von 200 bis 350 bar und bei einer Temperatur von 60 bis 90°C erfolgt.

9. Verfahren nach einem der Ansprüche 1 bis 8, **dadurch gekennzeichnet,** daß man zuerst durch Extraktion mit feuchtem Kohlendioxid den Wassergehalt konstant hält und anschließend durch Extraktion mit trockenem Kohlendioxid den Wassergehalt absinken läßt.

## Claims

1. Process for the removal of pesticides from ginseng roots by extraction with compressed carbon dioxide, characterised in that, before the extraction, the ginseng roots have a moisture content of 14 to 65 wt.%.

2. Process according to claim 1, characterised in that, before the extraction, one moistens the ginseng roots with 4 to 125 wt.% of water, referred to the starting weight of the roots.

3. Process according to claim 1, characterised in that one uses the ginseng roots for the extraction in freshly harvested and non-dried form.

4. Process according to one of claims 1 to 3, characterised in that one uses ground ginseng roots for the extraction.

5. Process according to one of claims 1 to 3, characterised in that one uses ginseng roots for the extraction in whole or coarsely comminuted form.

6. Process according to one of claims 1 to 5, characterised in that one moistens the ginseng roots by slow spraying on of water in a mixing apparatus.

7. Process according to one of claims 1 to 6, characterised in that one carries out the extraction at a pressure of > 100 bar and at a temperature of > 40°C.

8. Process according to one of claims 1 to 7, characterised in that the extraction takes place at a pressure of 200 to 350 bar and at a temperature of 60 to 90°C.

9. Process according to one of claims 1 to 8, characterised in that one first keeps the water content constant by extraction with moist carbon dioxide and subsequently allows the water content to sink by extraction with dry carbon dioxide.

## Revendications

1. Procédé d'élimination des pesticides de la racine de ginseng par extraction avec du dioxyde de carbone comprimé, caractérisé en ce que la racine de ginseng présente avant l'extraction une teneur en humidité de 14 à 65% en poids.

2. Procécé selon la revendication 1, caractérisé en ce que l'on humidifie la racine de ginseng avant l'extraction avec 4 à 125% en poids d'eau par rapport au poids initial de la racine.

3. Procédé selon la revendication 1, caractérisé en ce que l'on utilise la racine de ginseng sous forme fraîchement récoltée et non séchée pour l'extraction.

4. Procédé selon l'une des revendications 1 à 3, caractérisé en ce que l'on utilise une racine de ginseng broyée pour l'extraction.

5. Procédé selon l'une des revendications 1 à 3, caractérisé en ce que l'on utilise des racines de ginseng sous forme entière ou grossièrement fractionnée pour l'extraction.

6. Procédé selon l'une des revendications 1 à 5, caractérisé en ce que l'on humidifie la racine de ginseng par une lente pulvérisation d'eau dans un appareil mélangeur.

7. Procédé selon l'une des revendications 1 à 6, caractérisé en ce que l'on réalise l'extraction sous une pression > 100 bars et à une température > 40°C.

8. Procédé selon l'une des revendications 1 à 7, caractérisé en ce que l'extraction a lieu sous une pression de 200 à 350 bars et à une température de 60 à 90°C.

9. Procédé selon l'une des revendications 1 à 8, caractérisé en ce que l'on maintient tout d'abord constante la teneur en eau par extraction avec du dioxyde de carbone humide puis on fait baisser la teneur en eau par extraction avec du dioxyde de carbone sec.
